# EUROPEAN PATENT APPLICATION

(11) **EP 4 567 618 A1**
(43) Date of publication of application: **11.06.2025**
(21) Application number: 24211481.7
(22) Date of filing: 07.11.2024
(51) Int. Cl.: G06F 15/78, G06F 9/30

(54) **MULTI-STAGE COMPUTATIONALLY INTENSIVE PROCESS WITH COMPUTE-IN-MEMORY AND/OR MEMORY DATA STREAMING**

(30) Priority: 08.12.2023 US 202318533487
(71) Applicant: INTEL Corporation, Santa Clara, CA 95054 (US)
(72) Inventor: THYAGATURU, Akhilesh S., Santa Clara, 95054 (US); GUIM BERNAT, Francesc, Santa Clara, 95054 (US); KUMAR, Karthik, Santa Clara, 95054 (US); GARG, Mohit Kumar, Santa Clara, 95054 (US)
(74) Representative: Rummler, Felix

(57) **Abstract**

An apparatus is described. The apparatus includes a memory module. The memory module includes a memory. The memory module includes function execution circuitry. The function execution circuitry is configurable to execute a producer function and a consumer function of a multi-function process. The memory module includes an interface to be coupled to a memory controller.

## Description

### BACKGROUND

As "big data" applications are becoming more and more useful, system designers are seeking ways to implement these applications more efficiently.

### BRIEF DESCRIPTION OF FIGURES

Fig. 1a depicts a computationally intensive function;
Fig. 1b depicts a process that includes a sequence of computationally intensive functions;
Figs. 2a, 2b, 2c, 2d, 2e and 2f pertain to memory module embodiments that can perform a computationally intensive function;
Figs. 3a, 3b, 3c, 3d, 3e, 3f, and 3g depict various embodiments in which data is streamed between associated respective memories of source and consumer computationally intensive functions;
Fig. 4 shows a compiler for implementing a process that includes a sequence of computationally intensive functions;
Fig. 5 shows an emerging data center environment;
Figs. 6a and 6b depict an IPU.

### DETAILED DESCRIPTION

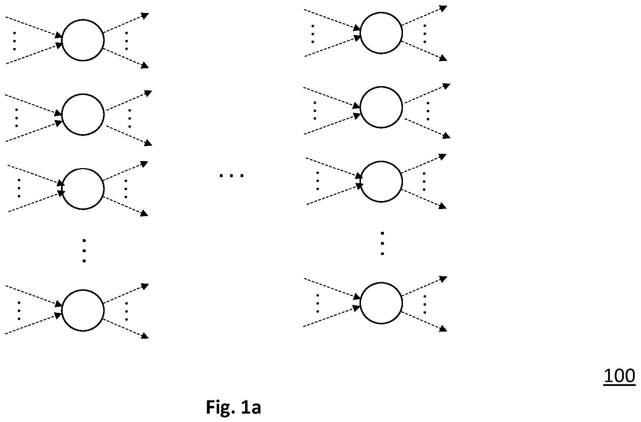

Fig. 1a depicts a high level view of a computationally intensive function. Computationally intensive functions commonly involve multiple layers of nodes 100 with data path connections between nodes of different layers, where, certain mathematical computations are made along certain ones of the data path connections and/or at certain ones of the nodes. Depending on the particular computationally intensive function the number of nodes per layer can be constant or vary.

The particular arrangement of layers, nodes per layer, pattern of data path connections between nodes, computations along data path connections and computations at nodes help to define a particular class (or sub-class) of computationally intensive functions any of which can be, to name a few: a matrix math function, a matrix multiplication function, a multi-dimensional multiply-add function, a neural network function, an artificial intelligence (Al) training function, an artificial intelligence inferencing function, a Fast Fourier Transform function, a video encoding and/or decoding function, an error detection function, and error detection and correction function (e.g., Viterbi trellis encoding and/or decoding, turbo encoding and/or decoding), a compression and/or decompression function, an encryption and/or decryption function, etc. Execution of a numerically intensive function typically entails accepting an input vector of data and performing computations along connections and/or at nodes which, in turn, can generate large numbers of intermediate terms. Eventually, final computations are made resulting in an output vector of data.

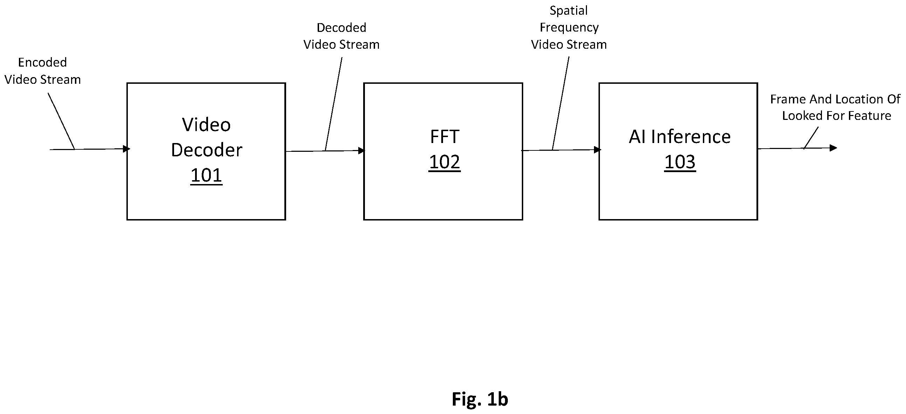

Centralized computing environments are seeing increasing demand for use cases that involve a sequence of computationally intensive functions ("stages"). For example, as observed in Fig. 1b, a data center may receive a request to recognize a particular feature in a video stream. However, in order to service the request, the data center: 1) processes the video stream data with a video decoding function 101 to produce a raw image stream; 2) processes the raw image stream with a two dimensional Fast Fourier Transform (FFT) function 102 to convert the raw image data into spatial frequency information; and, 3) streams the spatial frequency information through an artificial intelligence inferencing function 103 to find the looked for feature. Here, the video decoding 101, FFT 102 and AI inferencing functions 101, 102 and 103 belong to different computationally intensive classes.

Notably, any/all processing stages (video decoding 101, FFT 102 and AI inferencing 103) consume a large amount of input data, generate a large amount of output data and/or generate a large amount of intermediate terms. In the particular example of Fig. 1, the large amount of output data produced by the video decoding stage 101 corresponds to the large amount of input data consumed by the FFT stage 102 (the FFT 102 operates on the video decoder 101 output). Likewise, the large amount of output data produced by the FFT stage 102 corresponds to the large amount of input data consumed by the AI inference stage 103 (the AI inferencing function 103 operates on the FFT 102 output).

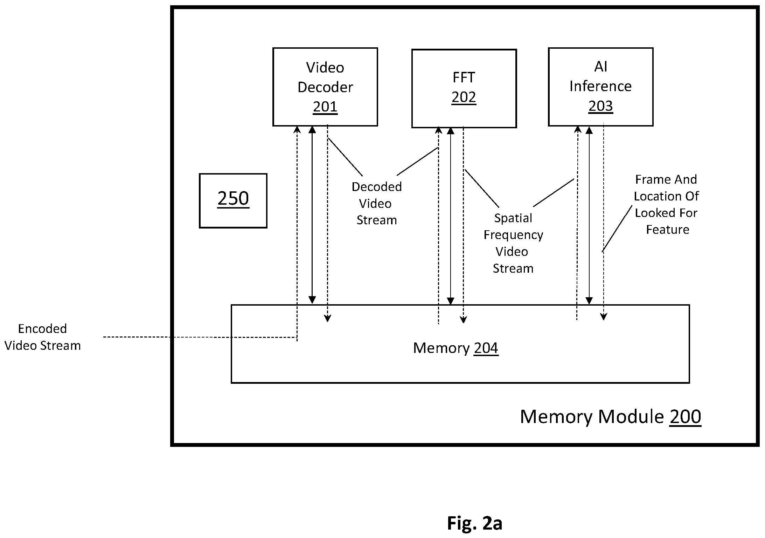

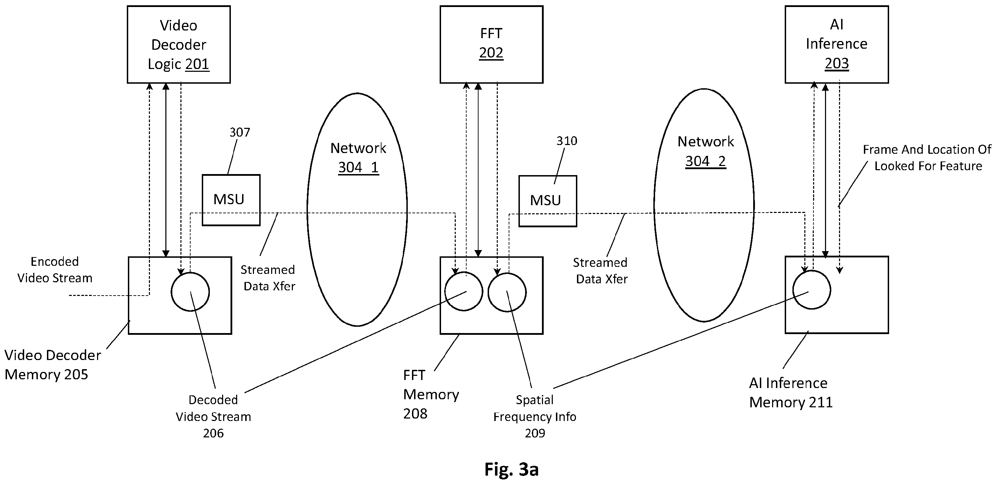

Figs. 2a through 2f and Figs. 3a through 3e, depicts improved approaches in which one or more computationally intensive stages of a multi-stage process is implemented with "compute in memory" logic and/or a source stage's (or "producer" stage's) output data is dynamically forwarded from its associated memory to the associated memory of the subsequent consumer stage, e.g., as a coarse grained and/or high bandwidth streaming process.

Fig. 2a shows a first compute in memory embodiment, where the circuitry used to implement multiple computationally intensive stages of a sequential process are integrated within a memory module 200 such as a dual in-line memory module (DIMM) or stacked memory chip solution such as a high bandwidth memory (HBM) solution.

The particular embodiment of Fig. 2a continues with the example of Fig. 1b in which the sequence of computationally intensive stages include a video decode stage 201, an FFT stage 202 and an AI inferencing stage 203 in order to recognize a sought for feature in a video stream. Thus, in the particular embodiment of Fig. 2a, the memory module 200 receives the encoded video stream, performs all three stages 201, 202, 203 and generates the output (frame and location of sought for feature).

Notably, the three stages 201, 202, 203 operate out of the memory module's memory 204. That is, the three stages receive their respective input vector from memory 204, write/read their respective intermediate terms to/from memory 204 and write their respective output vector to memory 204.

The circuitry used to implement the stages 201, 202, 203 can vary from embodiment to embodiment. For example, at one extreme the different stages 201, 202, 203 are implemented as different software and/or firmware programs that execute on a same processor that is embedded within the memory module 200. At another extreme, the respective functional logic of the stages 201, 202, 203 is implemented with different custom hardwired (e.g., application specific integrated circuit (ASIC)) blocks that are integrated within the memory module 200 (e.g., the memory module includes a first custom hardwired block that can perform the video decoding function, a second hardwired block that can perform the FFT function and a third hardwire block that can perform the AI inferencing function.

Other embodiments can include various flavors in between these extremes such as one of the stages being implemented in software/firmware, another stage being implemented with a custom hardwired circuit block and the third stage being implemented in software/firmware or with a custom hardwired circuit block. In various other embodiments, one or more of the stages can be implemented with field programable gate array (FPGA) circuitry rather than a processor that executes software/firmware or custom hardwired circuit (in cases where less than all of the stages are implemented with FPGA circuitry, the other stage(s) can be implemented in software/firmware and/or custom hardwired circuitry. Depending on implementation, the respective circuitry used to implement the different stages can be integrated on a system-on-chip (SOC), integrated across multiple chips within a multichip module, integrated across multiple chiplets that are disposed on a same interposer of a same semiconductor chip package, etc.

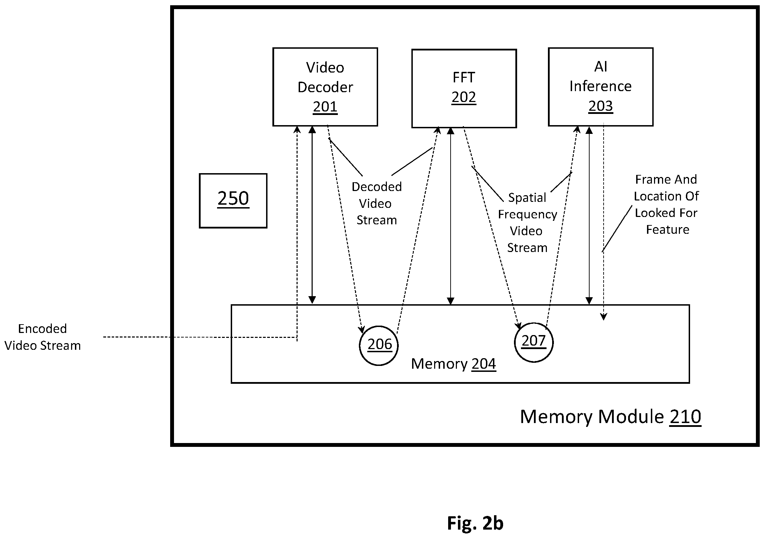

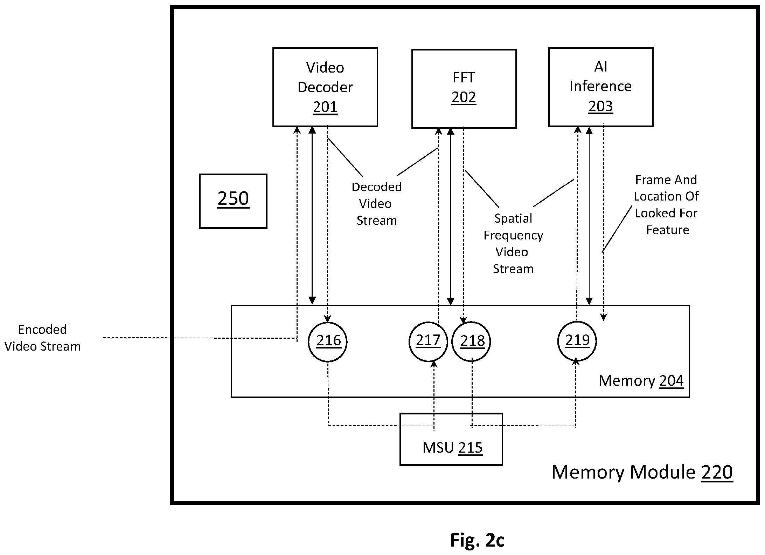

Figs. 2b and 2c elaborate on the memory module's memory management in order to support the multi-phase process. In particular, Fig. 2b shows that the multi-stage process can be effected by configuring a source phase ("producer" phase) to write its output data to the same region in memory 204 from where the following consumer phase reads its input data. In particular, as observed in Fig. 2b, the video decoding phase 201 writes its output data to the same region 206 in memory 204 from where the FFT phase 202 reads its input data, and, the FFT 202 writes its output data to the same region 207 in memory 204 from where the AI inference phase 202 reads its input data.

By contrast, Fig. 2c shows an embodiment where the output from a source phase is physically moved within the memory module 220 from the location in memory 204 where the source phase's output was written to another location in memory 204 from where the following consumer phase reads its input data. Here, the memory module 220 includes a memory streaming circuit 215 to stream the data between the two memory locations.

In the particular embodiment of Fig. 2c, the memory streaming circuit 215 streams the decoded video stream data from the location 216 in memory 204 where the video decoding stage 201 wrote it to another location 217 in memory 204 from where the FFT stage 202 will read it. Likewise, the memory streaming circuit 215 streams the spatial frequency video data from the location 218 in memory 204 where the FFT stage 202 wrote it to another location 219 in memory 204 from where the AI inferencing stage 203 will read it.

Although a single memory streaming circuit 215 is used/observed in the embodiment of Fig. 2c, in other embodiments, multiple memory streaming circuits can exist so that, e.g., a first memory streaming circuit streams the decoded video data and a second memory streaming circuit streams the spatial frequency video data, or, streams data between two phases of another process so that the memory module 220 can concurrently process two different multi-stage processes.

Comparing the memory module embodiment 210 of Fig. 2b with the memory module embodiment 220 of Fig. 2c, notably, the memory module embodiment 210 of Fig. 2b can be used in environments where a stage's allocated space in memory 204 can be dynamically configured, e.g., so that the input/output regions for any particular stage can be assigned on a multi-stage process by multi-stage process basis. So doing allows for straightforward definition of which source stage feeds which consumer stage. By contrast, the memory module embodiment 220 of Fig. 2c can be used when specific memory address ranges within memory 204 are allocated to certain stages in permanent or quasi-permanent fashion. Here, which source stage feeds which consumer stage for any particular multi-stage process can be readily defined by programming the memory streaming circuit(s) 215.

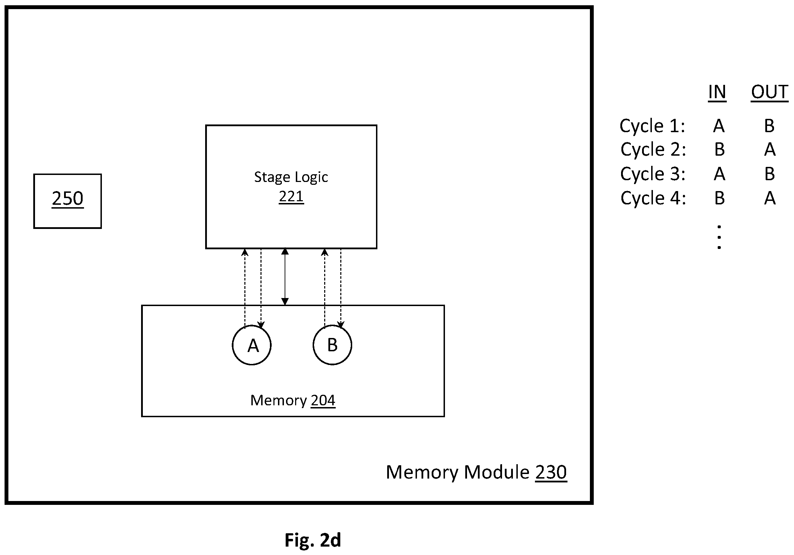

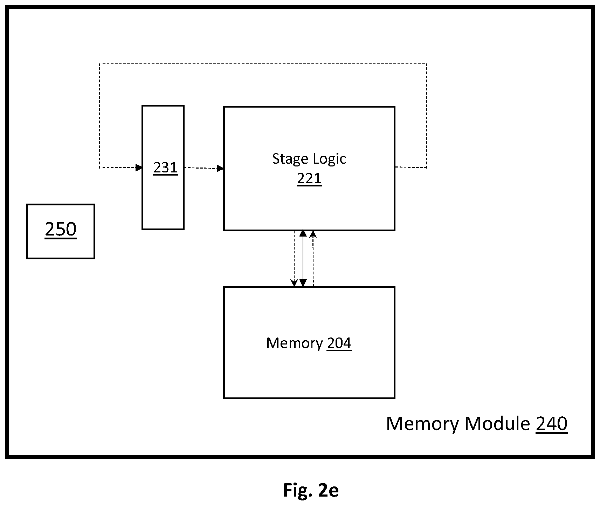

Figs. 2d and 2e elaborate on different ways in which a single stage can be designed to operate through the multiple layers of its associated computationally intensive process. Here, as described above, a computationally intensive process typically entails performing mathematical calculations along specific data paths through layers of nodes. Commonly, a series of calculations are made for a first layer, then, a second series of calculations are made for a next layer, where, the intermediate output terms generated for the first layer are used as input terms for the next layer. Additional input terms can include other parameters such as specific weight values for specific connections from/to specific nodes between layers.

Regardless, the stage's computationally intensive process is realized by using the same logic circuitry 221 for the processing of multiple layers (e.g., multiple consecutive layers, every layer, etc.) where the output terms generated for a preceding layer are feedback as the input terms for the following layer. In the approach of Fig. 2d, the stage logic circuitry 221 alternates its input and output locations in memory 204 over consecutive layers (cycles) so that the region that is written to with a preceding layer's output is the same region that is read from by the following layer for its input. In the approach of Fig. 2e, the output from a preceding layer is written to register space 231 within the memory module which is then read from to provide the input for the following layer. In both embodiments the memory 204 can be used a scratch pad to write and read terms used to perform the calculations of a particular layer.

The above discussion was directed to implementations where the logic circuitry 221 that performs the computationally intensive operations executes the operations for one layer per pass through the circuit 221. Other implementations can execute more than one layer per pass through. For example, if the circuitry can execute 5 layers per pass through, a first input provides the input for the first layer and the circuit 221 provides the output for the 5^{th} layer. The output for the 5^{th} layer is then provided as input to the circuit 221 for the next five layers (layers 6 through 10). The circuit 221 can write layer outputs for the inner 2^{nd}, 3^{rd}, and 4^{th} layers to memory as a form of intermediate information which is used as input for a next inner layer.

Figs. 2a through 2e depict a controller circuit 250 within the respective memory module 200, 210, 220, 230, 240 that can be used to implement any/all configurations of the stages 201, 202, 203, their respective allocated locations in memory 204 and/or any/all memory streaming units 215 so that a multi-stage process can be configured to execute end-to-end within the memory module. As described in more detail further below, a compiler or other low level software that runs on a host, the memory module, or both can receive a request for a particular sequence of stages that the memory module supports and then command the controller 250 to implement the sequence.

In response, according to one embodiment, the controller 250 configures the associated logic circuits to perform the respective stages including configuring the memory allocations for the stages and/or configures the data movement between memory locations for implementations that stream data between memory locations assigned to stages. In another embodiment, the host system controls the memory allocations for the specific stages (e.g., because memory 204 is part of the host system's main memory) and informs the controller 250 of which stages are to be assigned which memory locations. The controller 250 can then configure the sequence of stages as specified by the host as well the memory streaming units if any are to be utilized.

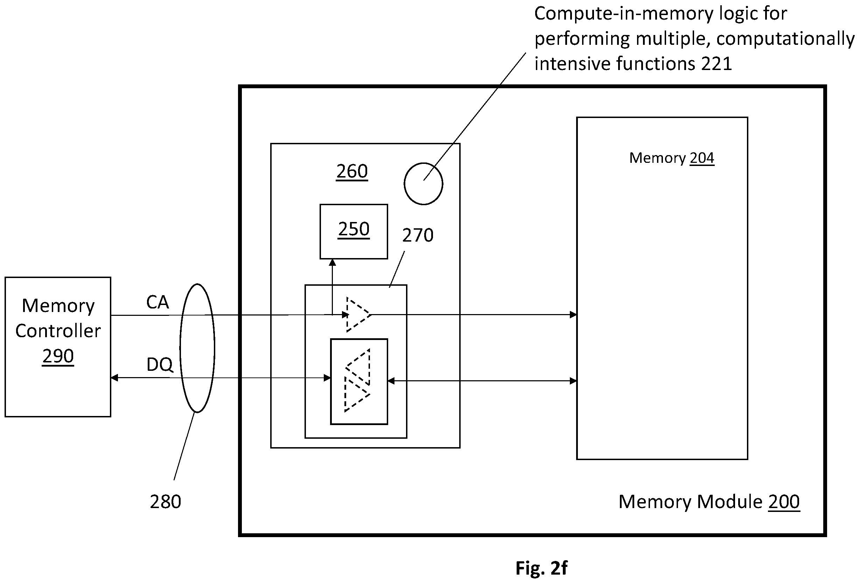

Fig. 2f provides a high level view of a memory module 200 having logic 221 for performing multiple computationally intensive instructions. As observed in Fig. 2f, the memory module 200 includes a memory 204 that is composed of multiple volatile (e.g., DRAM) memory chips and one or more support logic chips 260. The functionality of the support logic chip(s) 260 includes a host interface 270 that electrically couples the module 200 to one or more memory channels 280 that emanate from a memory controller 290 of a host system (e.g., a high performance processor).

The host interface 270 and the one or more memory channels 280 typically conform to an industry standard such as an industry standard promulgated by the Joint Electron Device Engineering Council (JEDEC) that, e.g., specifies a dual data rate (DDR) data transfer mechanism between the host system and the memory module 200 (e.g., JEDEC DDR4, JEDEC DDR5, JEDEC DDR6, JEDEC High Bandwidth Memory (HBM), etc.). Each memory channel typically includes a bi-directional data bus (DQ) for transporting write/read information to/from the memory module's memory 204 and a control channel (CA) for transporting memory addresses and commands from the host system to the memory module 200.

The host interface 270 receives read/write clocking/timing signals (e.g., RAS, CAS, CS) sent from the host system along the one or more memory channels 280 and applies them to at least a subset of the memory chips within memory 204. In various implementations, the host interface 270 is designed to buffer data signals between the host and memory 204 and redrive clocking/timing signals (e.g., RAS, CAS) sent from the host to the memory 204.

The one or more support logic chips 260 also includes a controller 250 which performs various control functions for the memory module 200 including control functions that are responsive to host commands that are sent to the memory module 200 by way of the memory channel's control channel. The controller 250 can be expanded to support and/or perform any of the functions used to support/implement the sequential execution of multiple stages of computationally intensive functions as described above with respect to Figs. 2a through 2e. Likewise, the one or more support logic chips 260 can include one or more instances of stage logic 221 to perform multiple computationally intensive functions within the memory module (and any supporting register space) as described above with respect to Figs. 2a through 2e.

Notably, the memory 204 and one or more support logic chips 260 are integrated onto a common hardware platform such as a dual in-line memory module (DIMM) or stacked chip solution. In the case of a DIMM, the memory chips 204 and supporting logic chip(s) 260 are mounted on a common printed circuit board that plugs into one or more of the host system's memory channels. In the case of a stacked chip solution, the memory chips 204 and supporting logic chip(s) 260 are vertically stacked (typically with the memory chips 204 stacked upon a supporting logic "base die) and mounted to the host system.

According to various stacked chip approaches, the stacked memory chips 204 and supporting logic chip(s) 260 are stacked within a same semiconductor chip package (e.g., as a standalone module, or, stacked on the same package substrate as a high performance host logic chip that uses the module's memory where the package substrate, memory module chips 260, 204 and host chip are integrated within the same semiconductor chip package, or, stacked on the high performance host chip and integrated within the same semiconductor chip package as the high host performance chip). Various DIMMs can also include stacked memory chips.

As alluded to above, data streaming between different source phase and consumer phase memory locations can be utilized to improve the scalability and speed of sequential computationally intensive processes by streaming data produced by a source phase on a first hardware platform, e.g., over a multi-hop nodal network, to a different hardware platform where the consumer phase is executed.

Moving data between memory locations as a streamed process greatly reduces overhead and avoids the use of non-volatile mass storage. Here, memory streaming entails moving the data in large chunks of data per unit of data transfer (coarse-grained) and/or without significant overhead (e.g., a complete stream of output data entails few request/response transactions with large amounts of data per transaction (e.g., a source output of 4GB is transferred as two transfers of 2GB or four transfers of 1GB)). In the case of overhead reduction, memory streaming can employ hardwired, dedicated ASIC circuitry (akin to a Direct Memory Access circuit) that is designed to move large chunks of data from source memory location to destination memory location with minimal or no CPU control.

Figs. 3a through 3f depict various embodiments in which output data from a source stage is streamed from the source stage's associated memory to the associated memory of a different hardware platform where the consumer stage is executed. The different hardware platforms can be, e.g., different memory chips, different memory chips of different integrated systems (e.g., different rack pluggable CPU blade units, different rack pluggable GPU blade units). With the streaming between respective memory locations, data movements are streamlined, use of mass storage can be avoided (data remains in volatile memory) and resources across different hardware platforms can be used to support a single multi-phase process.

Notably, the different hardware platforms can effect heterogenous multi-phase processes where, e.g., a first stage is implemented with a first type of stage logic (e.g., CPU), a second stage is implemented with a second type of stage logic (e.g., GPU), a third stage is implemented with a third type of stage logic (e.g., custom hardwired accelerator ASIC block designed to perform certain computationally intensive functions), a fourth stage is implemented with a fourth type of stage logic (e.g., FGPA), etc. As such, different kinds of stage logic technologies can be mixed/matched in various arrangements to configure a number of different multi-phase processes.

Fig. 3a shows a first embodiment of the aforementioned exemplary three stage video decoding/FFT/AI inferencing process in which the three stages 301, 302, 303 are implemented on three separate hardware platforms separated by a network 304_1, 304_2 (e.g., three separate logic chips that do not share a same local memory).

Here, an encoded video stream is stored in volatile memory 305 that is associated with (e.g., is local to) the first stage logic 301. The first stage logic 301 reads the encoded video stream from its associated volatile memory 305, decodes the encoded video steam and writes the decoded video stream 306 to its associated volatile memory 305.

Memory streaming circuitry 307 that is coupled to the first stage's associated memory 305 then streams the first stage's output data 306 (the decoded video stream) to the associated memory 308 of the second stage (FFT). The second stage logic 302 (FFT) then reads the decoded video stream 306 from its associated memory 308, performs the FFT function on the decoded video stream 306 and writes the spatial frequency video stream 309 (the FFT output) to its associated memory 308.

The memory streaming circuitry 310 that is coupled to the second stage's associated memory 308 streams the second stage's output data 309 (the spatial frequency video stream) to the associated memory 311 of the third stage 303 (Al inferencing). The third stage 303 (Al inferencing) reads the spatial frequency video stream 309 from its associated memory 311, performs the AI inferencing function on the spatial frequency video stream and writes the AI inferencing result to its associated memory 311 (e.g., the looked-for feature is identified in certain locations of certain video frames).

In the example of Fig. 3a, the different instances of stage logic 301, 302, 303 are implemented with respective logic circuits that are coupled to their respective associated (e.g., local) memories 305, 308, 311. As mentioned above, the stages 301, 302, 303 can be (but need not be) implemented with different types of logic such a CPU, dedicated hardwired accelerator logic circuit, or field programmable gate array circuit (FPGA).

In the particular embodiment of Fig. 3a, however, the logic circuitry that executes a particular stage function is external from the memory (compute in memory modules are not used to implement a stage). For example, the logic circuitry for each stage is disposed on a different system-on-chip (e.g., multi-core processor) having a memory interface that is physically coupled to volatile memory where the stage's input/output data is stored.

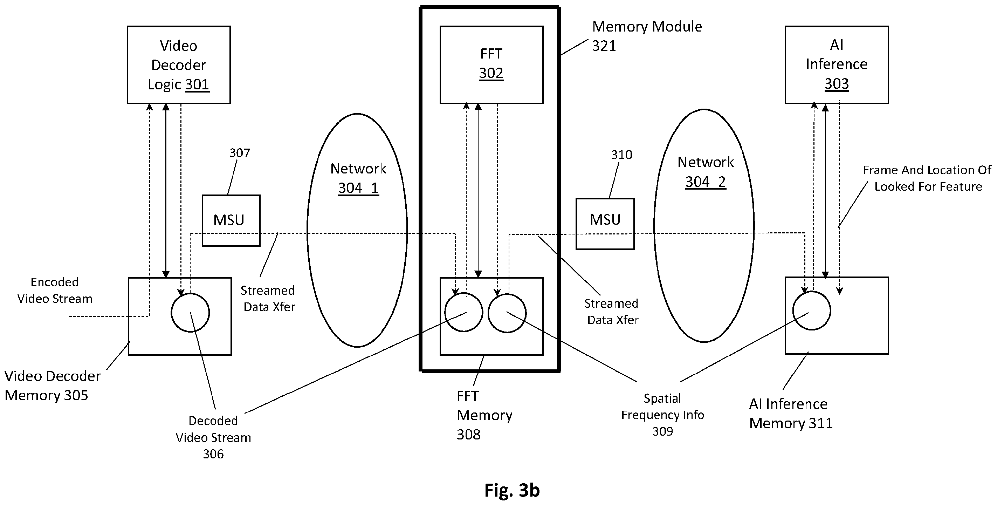

In the example of Fig. 3b, by contrast, the second stage is implemented with compute-in-memory hardware, e.g., as discussed at length above with respect to Figs. 2a through 2e (with the exception that the compute in memory solution 321 only performs the FFT stage 302 and not any of the other stages 301, 303). Here, the logic circuitry 302 that performs the functionality of the second stage (FFT) is integrated on a memory module 321 that also includes the memory 305 that stores the second stage's input/output 306, 308.

Here, implementing stage logic with compute-in-memory resources even further reduces the compute time of the stage because, e.g., the propagation delay associated with moving the stage's large amount of data through a large scale system on chip semiconductor chip that is coupled to the memory is avoided. For example, with the logic circuitry that performs the first and third stages 301, 303 perhaps being integrated on respective, large scale system-on-chips, the data that is consumed/produced by these stages 301, 303 needs to be routed and queued on these chips. The routing and queueing of the data on the chips can impose delays providing data to and/or removing data from the stage logic on these chips. Such routing/queuing delays are greatly mitigated with a compute-in-memory approach.

In the example of Figs. 3a and 3b, the memory streaming circuitry 307, 310 that streams output data from the associated memory of a source stage to the associated memory of a consumer stage is integrated on a semiconductor chip that is coupled to the respective memory of the stage (e.g., the above mentioned system-on-chips for the first and third stages).

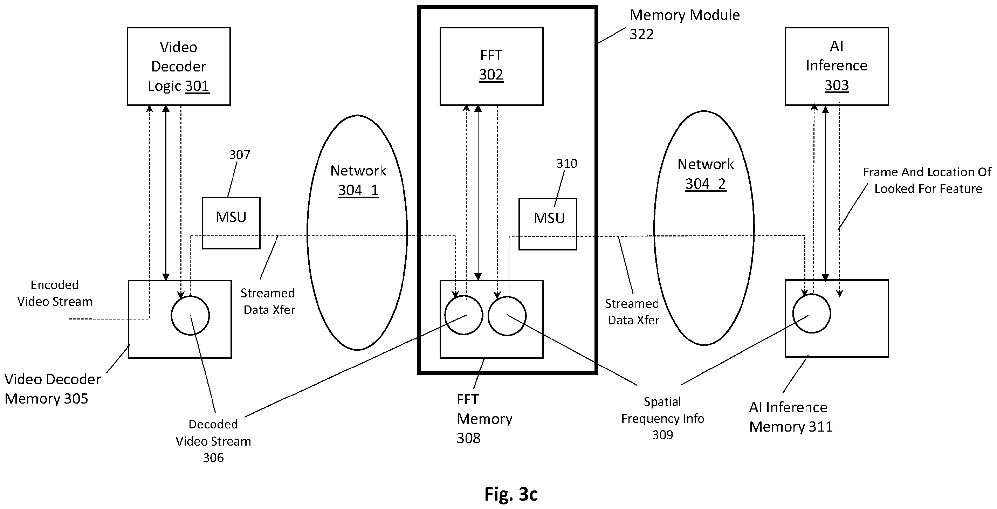

By contrast, in the embodiment of Fig. 3c, the memory streaming circuitry 310 that streams the second stage's output data from the second stage's associated memory 308 to the third stage's associated memory 311 is integrated on the same memory module 322 as the second stage's logic circuitry 302 and associated memory 308. The memory streaming circuitry 310 can be integrated on one of the memory module's volatile memory chips or another semiconductor chip that is integrated on the memory module.

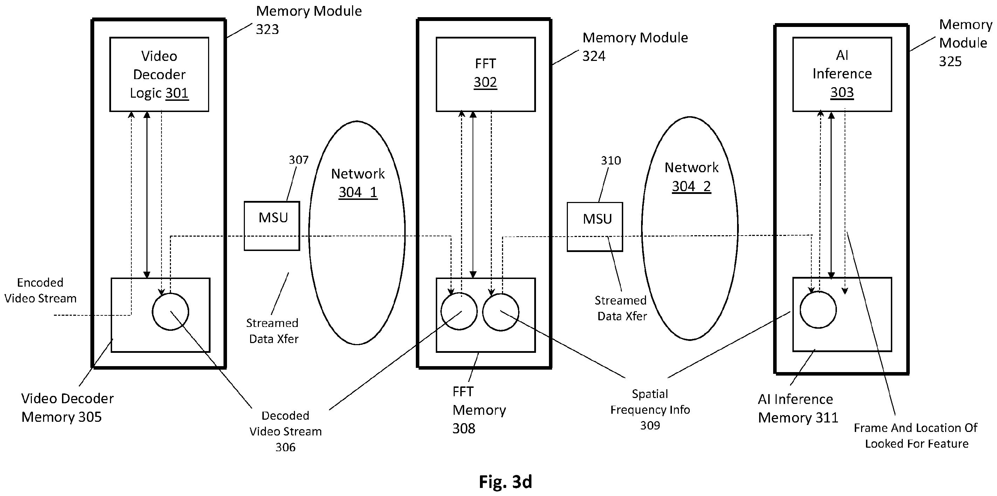

Fig. 3d shows another embodiment where all three stages 301, 302, 303 are implemented with compute-in-memory logic. This particular solution can greatly diminish the on-die routing delay of large scale logic chips as described above with respect to Fig. 3b.

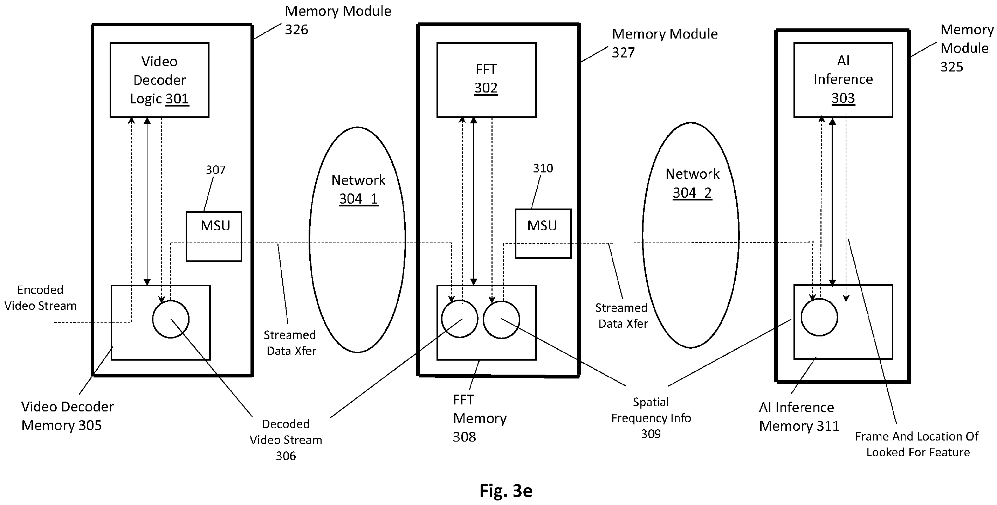

Fig. 3e shows another embodiment where the memory management streaming hardware 307, 310 is integrated on a respective memory module 326, 327 along with the stage's compute-in-memory functional logic 301, 302.

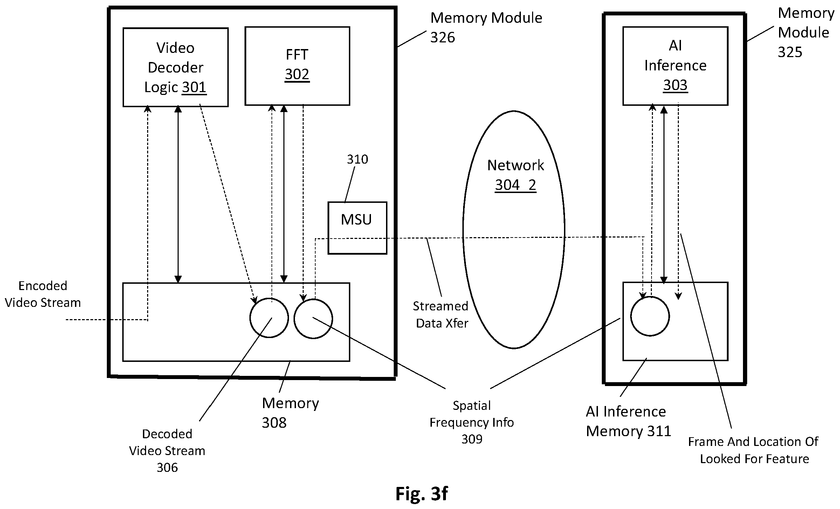

Fig. 3f shows another embodiment where the first two stages are implemented with a compute in memory module 326. The first and second stages 301, 302 share the same memory space 306 for the first stage 301 output and second stage 302 input. A memory streaming unit 310 within the memory module 326 is used to stream the second stage output to another compute in memory module 325 that implements the third stage 325.

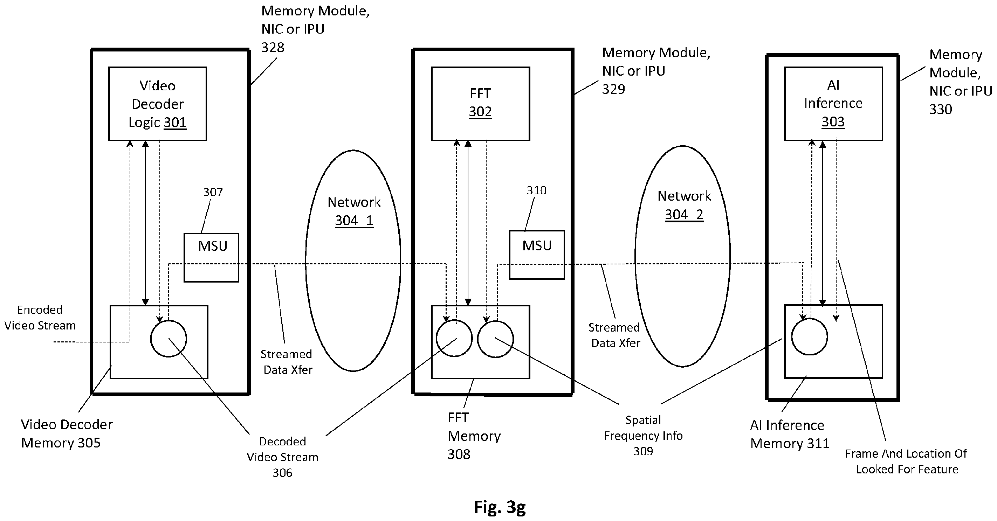

Fig. 3g shows another embodiment where the stage logic 301, 302, 303 and memory streaming circuitry 307, 310 is integrated on a memory module, network interface controller (NIC) or infrastructure processing unit (IPU). NICs and IPUs are discussed in more detail further below.

Figs. 3a through 3g only show a few possible embodiments. Other embodiments can include more stages, e.g., with any/all preceding source stages that feed a subsequent consumer stage having associated memory streaming circuitry to stream the output data from the associated memory of the source stage to the associated memory of the consumer stage.

For one or more stages of a sequential multi-stage process, the logic circuity that implements a particular stage function can be integrated on a semiconductor chip that is coupled to the stage's associated memory, or, can be integrated within the associated memory's memory module as a compute-in-memory function. Likewise, the memory streaming circuitry of the one or more stages can be integrated on a semiconductor chip that is coupled to the stage's associated memory, or, can be integrated within the associated memory (e.g., integrated on a memory chip and/or a memory module). Moreover, stage logic and/or memory management streaming hardware can be integrated on a NIC or IPU.

Note that in various embodiments, certain data items and/or range of data located at a particular memory address range may be concurrently used and/or accessed (e.g., as input information) by more than one stage of a same multi-stage process (e.g., the process forks into two, parallel/concurrent paths of stages), or, by respective stages of one or more different multi-stage processes.

In such cases, a coherency protocol can be used to preserve the coherency of the data in memory that is concurrently used/accessed by more than one stage/process. According to various coherency protocols, a data item is assigned a particular state (from amongst a limited set of states) based on how the item was previously used or is currently being used. Any copies/versions of the data item that reside outside main memory are typically tagged with the data item's state which, in turn, influences or determines how the data item is used/treated/handled by the multiple stages/processes that currently have and/or seek access to the data item.

A particular coherency protocol is typically defined by its particular set of data item states. Examples include the Modified, Shared, Invalid (MSI) protocol, the Modified, Exclusive, Shared, Invalid (MESI) protocol, the Modified, Owned, Shared, Invalid (MOSI) protocol, and the Modified, Owned, Exclusive, Shared, Invalid (MOESI) protocol. The logic that executes the protocol and determines, assigns and/or tags a particular data item with a particular state can be located where the data item is used and/or stored (e.g., the logic that executes a particular function of a particular stage of a multi-stage process, and/or, circuitry that is coupled to the memory or memory module where the data is kept in memory (such as a host side main memory controller that is coupled to a memory module where the data item is kept, logic circuitry within a memory module, etc.), and/or, circuitry between the logic that executes a particular function of particular stage of a multi-stage process and memory (such as caching circuitry).

Alternatively or in combination, a data item can be made read-only, non-cacheable in CPU cache, invalidated in CPU cache, and/or protected with a semaphore lock to prevent data consistency problems, e.g., where two different stages/processes concurrently attempt to write different data values to the same data item. Again, the policing circuitry that implements these protections can be located where the data item is used, stored in memory and/or in between where the data item is used and stored in memory.

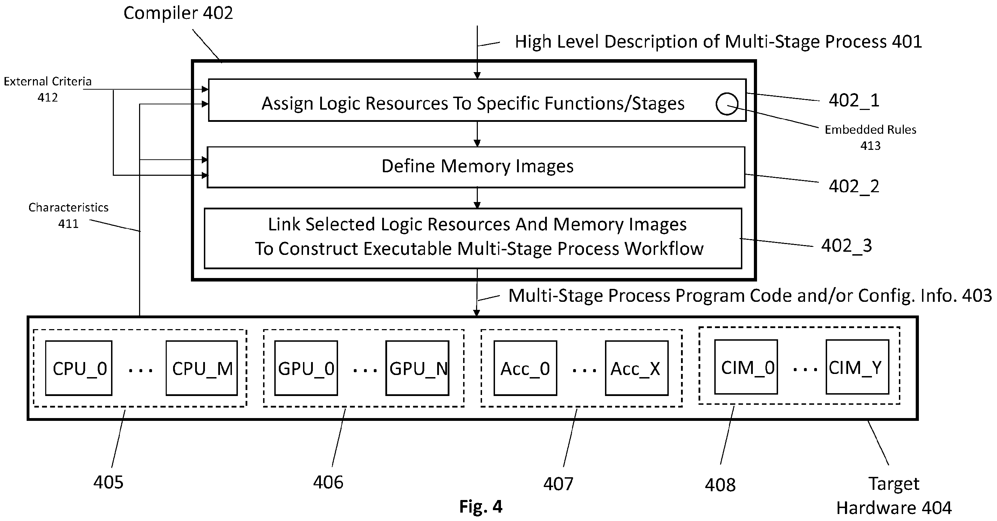

Fig. 4 depicts a compilation process 402_1, 401_2, 401_3 that converts a high-level description 401 of a multi-stage process into program code and/or configuration information 403 that is targeted to a particular (target0 hardware environment 404. The multi-stage process that is defined by the high level description 401 can include multiple computationally intensive stages as discussed at length above.

The high-level description 401 defines (e.g., as a directed acyclic graph) the multi-stage process, where, e.g., a computationally intensive stage having an input data dependency on one or more other computationally intensive stages is positioned downstream along the process's flow from the one or more other computationally intensive stages. Likewise, a computationally intensive stage that does not have an input data dependency on one or more other computationally intensive stages can be executed concurrently with the one or more other computationally intensive stages. The high-level description 401 can be generated by a software program (and/or programming language) used to define multi-stage workflows and is constructed according to a format that the compiler 402 is designed to accept, parse and comprehend.

The target hardware 404 is the hardware upon which the multi-stage process is to be executed. As described in more detail below, the target hardware 404 can vary widely from embodiment to embodiment. For example, toward one extreme, the target hardware 404 corresponds to one or more data centers, whereas, toward another extreme, the target hardware 404 corresponds to a single compute-in-memory module.

Characteristics 411 of the target hardware 404 are provided to a compiler 402 that performs the compilation process. The characteristics 411 can include descriptions of the logic resources within the target hardware 404 that are capable of performing computationally intensive functions. For example, if the target hardware 404 includes, as observed in Fig. 4, CPUs 405, GPUs 406, accelerators 407 and compute-in-memory modules 408 capable of performing their own respective computationally intensive functions, the compiler 402 receives a description of these logic resources and the particular set of computationally intensive functions that each logic resource can perform (notably, different logic resource types can support different respective sets of functions). In various embodiments, the characteristics 411 are provided through an API that resides between the compiler 402 and software associated with the target hardware platform 404. For example, the compiler 411 invokes query and/or discover functions offered by the API that allow the compiler to understand what logic resources exist on the platform 404 for executing the computationally intensive functions and/or the capabilities of such logic resources (e.g., the functions the logic resources are capable of executing).

The compiler 402 proceeds to assign 402_1 certain ones of these logic resources to perform certain ones of the process's computationally intensive functions. Again, the set of logic resources that the compiler 402 selects from can vary widely from embodiment to embodiment. For example, if the target hardware 404 corresponds to a data center, the compiler 402 could select from amongst the data center's CPUs 405, GPUs 406, accelerators 407 and compute-in-memory modules 408, whereas, if the target hardware 404 corresponds to single compute-in-memory module, the compiler 402 can only select from the logic resources that are integrated on the module.

Notably, to the extent different types of logic resources 405, 406, 407, 408 support different functions, the compiler 402 is able to exploit the different types of logic resources to, e.g., effect wide scale heterogenous computing. For example, for a particular multi-stage process, the compiler 402 can choose from amongst the CPUs 405 to perform the functions of the process that are unique to CPUs, choose from amongst the GPUs 406 to perform the functions of the process that are unique to GPUs, choose from amongst the accelerators 407 to perform the functions of the process that are unique to the accelerators, and, choose from amongst the compute-in-memory modules 408 to perform the functions of the process that are unique to the compute-in-memory modules.

Further still, when a particular stage function can be executed by more than one type of logic resource (e.g., two or more of a CPU, GPU, accelerator, and compute-in-memory module can perform the same function), the compiler can weigh the different characteristics and/or features of the different resources to determine which particular type of logic resource is the most appropriate to perform the particular function. For example, the compiler can choose a CPU over a GPU to perform a particular stage function (e.g., because high performance is not required), or, choose an accelerator over a CPU and a GPU to perform a particular stage function (e.g., because high performance and low power is preferred).

Here, when confronted with multiple candidate logic resources that are capable of performing a particular stage function, whether the multiple candidate logic resources are all of a same type or include different types, the compiler's logic resource assignment process 402_1 can use any of a number of external criteria 412 and/or embedded rules 413 to narrow the candidate field down to a particular logic resource or reduced set of candidate logic resources. The external criteria 412 can be defined by those who have provided the description 401 of the multi-stage process (e.g., a customer of a cloud service), and/or, an operator of the target hardware 404 (e.g., the cloud service). The embedded rules 413 can be hard-coded into the compiler 402 and/or determined from the compiler's configuration options (the latter of which can be, e.g., provided by an operator of the target hardware 404).

The external criteria 412 can include target performance, target power consumption and/or target cost characteristics (to name a few) for the process. For example, if the compute-in-memory modules 407 within the target hardware 404 are deemed to be low cost, low performance and low power consumption solutions (e.g., because the host interfaces that the memory modules plug into have power consumption limits) and the external criteria 412 specifies high cost, high performance, and high power consumption, the compiler 402 will more favorably assign the process's functions to logic resources other than the compute-in-memory modules (e.g., CPUs 405, GPUs 406 or accelerators 407).

The embedded rules 413 can influence the logic resource selection process 402_1 by specifying certain implementation preferences, such as, keeping the process's assigned logic resources in close physical and/or architectural proximity to one another. For example, the embedded rules 413 can specify a preference for implementing as many of the process's stages on a same memory module, and for those stages that cannot be implemented on the memory module, performing them on one or more other memory modules that is/are coupled to the same memory bus and/or same host system-on-chip that the memory module is coupled to. If there still remain stage functions that are not assignable to the memory module or such other memory modules, such stage functions are then preferably performed with logic resources that reside on the host system-on-chip that the memory modules are coupled to, etc. (e.g., a CPU core, a GPU core, or an accelerator core on the host system-on-chip).

The compiler's selection process 402_1 can also be designed to resolve conflicting preferences between the external criteria 412 and the embedded rules 413 (e.g., the embedded rules 413 would prefer assigning a function to a memory module which can only perform the function slowly but the external criteria 412 specify high performance for execution of the function/process).

The compiler's selection process 402_1 can be performed statically (well in advance of the process's actual runtime) or dynamically. In the case of a dynamic selection process 402_1, in which the selection process 402_1 is a form of "just-in-time" compilation, the target hardware characteristics 411 (and/or external criteria 412) can indicate which of the candidate logic resources within the target hardware 404 are currently available for assignment and which are not currently available for assignment. For example, if the target hardware 404 is a data center, the characteristics/criteria 411/412 can inform the compiler 402 of which logic resources are currently busy processing the tasks of other processes and which logic resources are currently idle. The selection process 402_1 can then proceed to eliminate the busy logic resources from consideration, unless other external criteria 412 and/or embedded rules 413 would prefer otherwise (at least for certain busy logic resources), in which case, the selection process's conflict resolution can determine whether to eliminate/include a busy resource from/for consideration.

The compiler 402 can also define the memory images 402_2 for the process's different stages. This can include determining the size and/or dimension of each stage's input data memory footprint and output data memory footprint, which, in turn, is based on the specific function that a stage has been assigned to perform. The target hardware's characteristics 411 can also specify whether memory streaming resources are coupled to the physical memory resources that a particular stage can/will use to store its output data (e.g., if the stage logic is within a particular memory module, the stage's memory resources correspond to the memory module's memory).

In various embodiments, external criteria 412 and/or embedded rules 413 can then help determine whether memory streaming of a stage's output data is: 1) mandatory; 2) preferably used; 3) not preferably used and not preferably not used; 4) preferably not used; and, 5) not to be used. For example, if a source stage and consumer stage are separated by a multi-hop nodal network and memory streaming resources are coupled to the source stage's physical memory resources, the memory image compilation process 402_2 can indicate that memory streaming of the source stage's output data is mandatory.

In other embodiments, the compiler 402 can only provide preferences for streaming (e.g., options 1) and 5) above are not available to the compiler 402), or, the compiler does not consider memory streaming and does not provide any streaming preferences or hints to the target hardware 404.

Although the compiler 402 has thus far been described as performing a process's logic resource assignments 402_1 before it defines the memory images 402_2 and/or streaming preferences for the process's stages, in various embodiments, the pair of processes 402_1, 402_2 work together and/or are iterative in nature. For example, if the target hardware characteristics 411 indicate that memory streaming resources are not coupled to the memory where a particular stage logic resource will write its output data, the compiler 402 can use this information to justify the elimination of the stage logic resource from consideration for assignment of the stage's function.

After the functions of the process's stages have been assigned to specific logic resources within the target hardware 404, the program code 403 to implement the process is constructed 402_3 and any configuration information and/or hints 403 to be provided to the target hardware is formulated 402_3. The program code construction process 402_3 links sequential stages of the process by constructing 402_3 the program code 403 to command and/or instruct the assigned stage logic resources to perform their respective functions in the correct sequence order, where, a stage does not begin an operation until the input data for that operation has been written into that stage's input memory. Where data dependencies allow, the constructed code 403 can also define parallel, concurrent and/or pipelined execution of multiple processes of the process. In various embodiments, the constructed code 403 and/or configuration information can also specify specific logic resources (or other hardware resources) that are to be enabled to execute the multi-stage process and/or specific logic resources (or other hardware resources) that are to be disabled to execute the multi-stage process.

Within the constructed code 403, a command or instruction that commands/instructs a particular stage logic resource to perform the particular stage's function can identify the function within a command syntax or instruction format that is specific to the particular stage logic resource. For example, if the logic resource is a CPU or GPU and the function is implemented with a firmware program that is executed by the CPU or GPU, the program code 403 can be constructed to include a command that calls out the firmware program, e.g., according to an API for the CPU's/GPU's firmware library.

By contrast, if the logic resource is integrated on a compute-in-memory module, the program code 403 can be constructed to include a command that invokes the function on the memory module as specified by the API of the memory module's device driver. Alternatively, if a host CPU supports invocations of the memory module's function in hardware, the program code 403 can be constructed to include an instruction that is formatted according to the CPU's instruction format and that includes the opcode or other information used by the CPU to invoke the function on the memory module.

If the code construction process 402_3 constructs intermediate code, the constructed code 403 can specify a stage's command/instruction in the syntax/format of an interpreter or lower compiler that targets the stage's specific logic resource hardware.

As discussed above, the code construction process 402_3 can also include configuration information and/or hints that are generated by the compiler 402 and are provided to the target hardware 404. The configuration information can describe the memory image information for the process's respective stages so that the target hardware 404, and/or lower level software and/or firmware of the target hardware 404 (e.g., operating system(s), hyper-visors(s), virtual machine monitor(s), firmware, etc.) can allocate the correct amount of memory space in the respective physical memory resources of the different stage logic resources that are utilized by the process.

Likewise, the configuration information can describe which source stage output memory image will feed which consumer stage input memory image(s). From this information, any streaming preference hints provided by the compiler 402 (if any), the target hardware 404, and/or lower level software and/or firmware of the target hardware 404 can configure any streaming logic resources within the target hardware 404 to stream the content of a source stage's output memory region to a consumer stage's input memory region.

As mentioned above, the compilation process 402_1, 402_2, 402_3 can be performed statically (well in advance of actual runtime), dynamically (imminently before runtime) or some combination thereof (e.g., portions of processes 402_1, 402_2, 402_3 are performed statically and other portions of processes 402_1, 402_2, 402_3 are performed dynamically). Note that although the discussion of Fig. 4 has referred to item 402 as "a" compiler, the compilation process can be performed with multiple compilers that operate separately (e.g., processes 402_1, 402_2 and 402_3 are performed with different compilers).

Various discussions above have referred to the memory that is associated with a particular stage as that stage's "associated memory". Notably, the memory that is associated with a stage can be a memory that is local to the stage logic (e.g., the memory is physically coupled to the semiconductor chip where the stage logic resides, such as, a large scale system on chip upon which the stage logic is integrated and to which the stage logic's associated memory is physically coupled, or, memory within a compute-in-memory module that includes logic to perform a stage function). However, memory that is associated with a stage is not necessarily local to the stage logic. For example, as described in more detail below, certain data center implementations are migrating toward pooled memory resources in which the volatile memory that a number of CPU cores, GPU cores and/or accelerators execute their software out of are separated from the cores/accelerators by a network. Thus, more generally, a stage's associated memory is the memory that the stage's logic reads its input data from and/or writes its output data to.

In cases where the respective logic circuits that execute a source stage's function and the subsequent consumer stage's function are integrated on a common hardware platform (e.g., same semiconductor chip, different semiconductor chips integrated on a same electronic circuit board (e.g., same blade server), etc., the streaming of the source stage's output data from the source stage's memory to the consumer stage's memory can still improve performance. For example, if the stages' have different statically configured memory locations, the output data of the source stage should be transferred from the source stage's memory to the consumer stage's memory.

Although embodiments above placed emphasis on embodiments where all stages are computationally intensive functions, in various embodiments the process includes one or more computationally intensive functions and one or more functions that are not computationally intensive (such as a common business logic application/function, e.g., billing, email, scheduling, etc.).

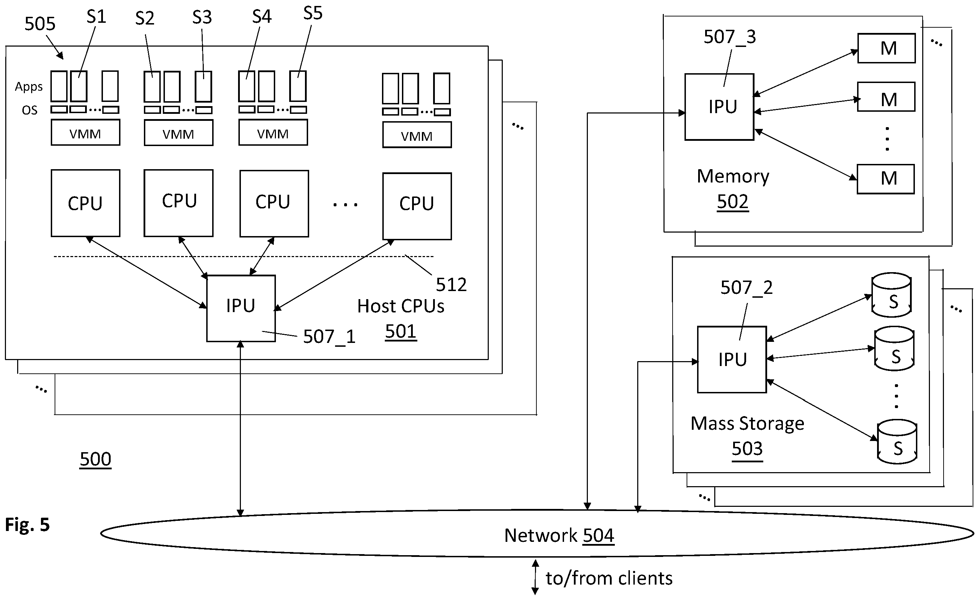

Fig. 5 shows a new, emerging data center environment in which "infrastructure" tasks are offloaded from traditional general purpose "host" CPUs (where application software programs are executed) to an infrastructure processing unit (IPU), edge processing unit (EPU), or data processing unit (DPU) any/all of which are hereafter referred to as an IPU.

Networked based computer services, such as those provided by cloud services and/or large enterprise data centers, commonly execute application software programs for remote clients. Here, the application software programs typically execute a specific (e.g., "business") end-function (e.g., customer servicing, purchasing, supply-chain management, email, etc.). Remote clients invoke/use these applications through temporary network sessions/connections that are established by the data center between the clients and the applications. A recent trend is to strip down the functionality of at least some of the applications into more finer grained, atomic functions ("micro-services") that are called by client programs as needed. Micro-services typically strive to charge the client/customers based on their actual usage (function call invocations) of a micro-service application.

In order to support the network sessions and/or the applications' functionality, however, certain underlying computationally intensive and/or trafficking intensive functions ("infrastructure" functions) are performed.

Examples of infrastructure functions include routing layer functions (e.g., IP routing), transport layer protocol functions (e.g., TCP), encryption/decryption for secure network connections, compression/decompression for smaller footprint data storage and/or network communications, virtual networking between clients and applications and/or between applications, packet processing, ingress/egress queuing of the networking traffic between clients and applications and/or between applications, ingress/egress queueing of the command/response traffic between the applications and mass storage devices, error checking (including checksum calculations to ensure data integrity), distributed computing remote memory access functions, etc.

Traditionally, these infrastructure functions have been performed by the CPU units "beneath" their end-function applications. However, the intensity of the infrastructure functions has begun to affect the ability of the CPUs to perform their end-function applications in a timely manner relative to the expectations of the clients, and/or, perform their end-functions in a power efficient manner relative to the expectations of data center operators.

As such, as observed in Fig. 5, the infrastructure functions are being migrated to an infrastructure processing unit (IPU) 507. Fig. 5 depicts an exemplary data center environment 500 that integrates IPUs 507 to offload infrastructure functions from the host CPUs 504 as described above.

As observed in Fig. 5, the exemplary data center environment 500 includes pools 501 of CPU units that execute the end-function application software programs that are typically invoked by remotely calling clients. The data center also includes separate memory pools 502 and mass storage pools 503 to assist the executing applications. The CPU, memory storage and mass storage pools 501, 502, 503 are respectively coupled by one or more networks 504.

Notably, the pools 501, 502, 503 have respective IPUs 507_1, 507_2, 507_3 on its front end or network side. Here, a particular IPU 507 performs pre-configured infrastructure functions on the inbound (request) packets it receives from the network 504 before delivering the requests to its respective pool's end function (e.g., executing application software in the case of the CPU pool 501, memory in the case of memory pool 502 and storage in the case of mass storage pool 503).

As the end functions send certain communications into the network 504, the IPU 507 performs pre-configured infrastructure functions on the outbound communications before transmitting them into the network 504. The communication 512 between the IPU 507_1 and the CPUs in the CPU pool 501 can transpire through a network (e.g., a multi-nodal hop Ethernet network) and/or more direct channels (e.g., point-to-point links) such as Compute Express Link (CXL), Advanced Extensible Interface (AXI), Open Coherent Accelerator Processor Interface (OpenCAPI), Gen-Z, etc.

Depending on implementation, one or more CPU pools 501, memory pools 502, mass storage pools 503 and network 504 can exist within a single chassis, e.g., as a traditional rack mounted computing system (e.g., server computer). In a disaggregated computing system implementation, one or more CPU pools 501, memory pools 502, and mass storage pools 503 are separate rack mountable units (e.g., rack mountable CPU units, rack mountable memory units (M), rack mountable mass storage units (S).

In various embodiments, the software platform on which the applications 505 are executed include a virtual machine monitor (VMM), or hypervisor, that instantiates multiple virtual machines (VMs). Operating system (OS) instances respectively execute on the VMs and the applications execute on the OS instances. Alternatively or combined, container engines (e.g., Kubernetes container engines) respectively execute on the OS instances. The container engines provide virtualized OS instances and containers respectively execute on the virtualized OS instances. The containers provide isolated execution environment for a suite of applications which can include applications for micro-services.

Notably, any of the compute-in-memory embodiments described above with respect to Figs. 2a through 2e and 3a through 3g in which logic is integrated into a memory module is to implement one or more computationally intensive functions to, e.g., improve the performance of processes that include multiple sequential stages of computationally intensive functions, such memory modules can be integrated into the memory pool of 502 of Fig. 5. Moreover, as described by the discussion of Fig. 3g, an IPU or NIC can be configured to have logic and associated memory to support execution of one or more computationally intensive functions of a sequence of computationally intensive functions. Furthermore, a data processing unit (DPU) (a chip having a CPU and a network interface)

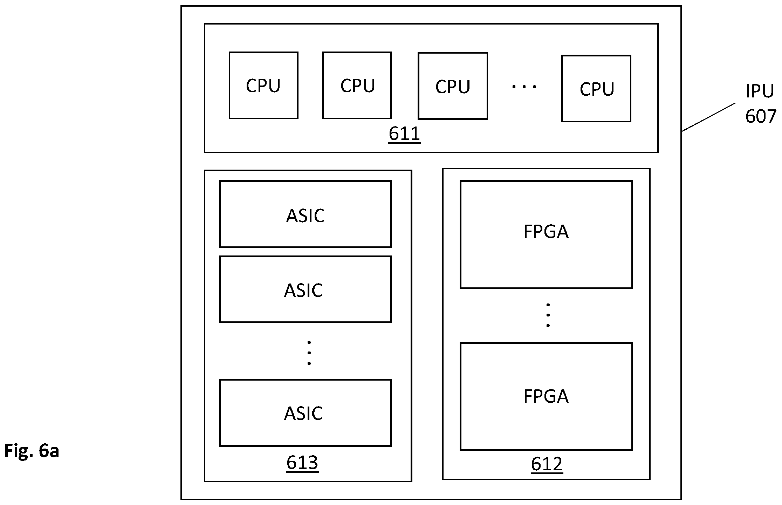

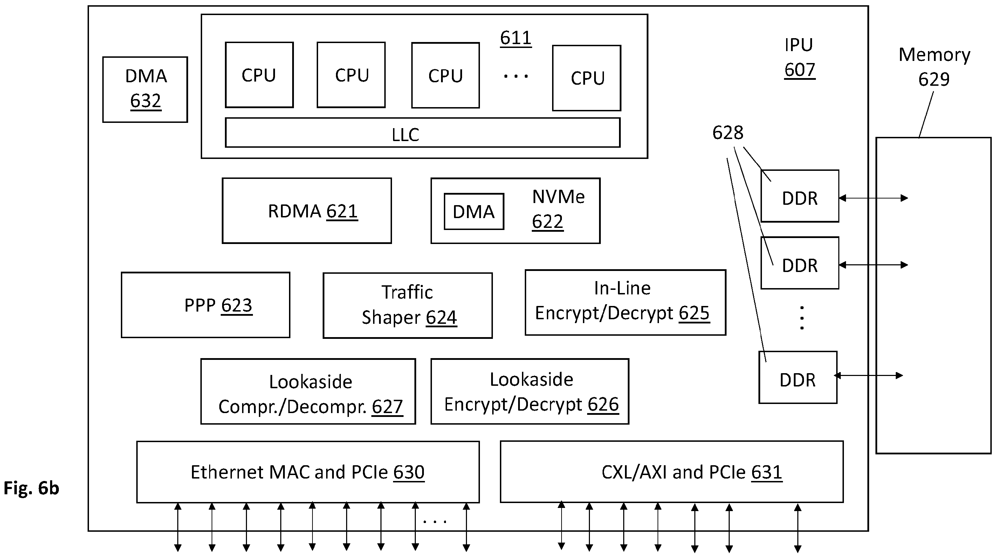

Fig. 6a shows an exemplary IPU 607. As observed in Fig. 6 the IPU 607 includes a plurality of general purpose processing cores 611, one or more field programmable gate arrays (FPGAs) 612, and/or, one or more acceleration hardware (ASIC) blocks 613. An IPU typically has at least one associated machine readable medium to store software that is to execute on the processing cores 611 and firmware to program the FPGAs (if present) so that the processing cores 611 and FPGAs 612 (if present) can perform their intended functions.

The IPU 607 can be implemented with: 1) e.g., a single silicon chip that integrates any/all of cores 611, FPGAs 612, ASIC blocks 613 on the same chip; 2) a single silicon chip package that integrates any/all of cores 611, FPGAs 612, ASIC blocks 613 on more than chip within the chip package; and/or, 3) e.g., a rack mountable system having multiple semiconductor chip packages mounted on a printed circuit board (PCB) where any/all of cores 611, FPGAs 612, ASIC blocks 613 are integrated on the respective semiconductor chips within the multiple chip packages.

The processing cores 611, FPGAs 612 and ASIC blocks 613 represent different tradeoffs between versatility/programmability, computational performance, and power consumption. Generally, a task can be performed faster in an ASIC block and with minimal power consumption, however, an ASIC block is a fixed function unit that can only perform the functions its electronic circuitry has been specifically designed to perform.

The general purpose processing cores 611, by contrast, will perform their tasks slower and with more power consumption but can be programmed to perform a wide variety of different functions (via the execution of software programs). Here, the general purpose processing cores can be complex instruction set (CISC) or reduced instruction set (RISC) CPUs or a combination of CISC and RISC processors.

The FPGA(s) 612 provide for more programming capability than an ASIC block but less programming capability than the general purpose cores 611, while, at the same time, providing for more processing performance capability than the general purpose cores 611 but less than processing performing capability than an ASIC block.

Fig. 6b shows a more specific embodiment of an IPU 607. The particular IPU 607 of Fig. 6b does not include any FPGA blocks. As observed in Fig. 6b the IPU 607 includes a plurality of general purpose cores 611 and a last level caching layer for the general purpose cores 611. The IPU 607 also includes a number of hardware ASIC acceleration blocks including: 1) an RDMA acceleration ASIC block 621 that performs RDMA protocol operations in hardware; 2) an NVMe acceleration ASIC block 622 that performs NVMe protocol operations in hardware; 3) a packet processing pipeline ASIC block 623 that parses ingress packet header content, e.g., to assign flows to the ingress packets, perform network address translation, etc.; 4) a traffic shaper 624 to assign ingress packets to appropriate queues for subsequent processing by the IPU 607; 5) an in-line cryptographic ASIC block 625 that performs decryption on ingress packets and encryption on egress packets; 6) a lookaside cryptographic ASIC block 626 that performs encryption/decryption on blocks of data, e.g., as requested by a host CPU 301; 7) a lookaside compression ASIC block 627 that performs compression/decompression on blocks of data, e.g., as requested by a host CPU 501; 8) checksum/cyclic-redundancy-check (CRC) calculations (e.g., for NVMe/TCP data digests and/or NVMe DIF/DIX data integrity); 9) thread local storage (TLS) processes; etc.

So constructed/configured, the IPU can be used to perform routing functions between endpoints within a same pool (e.g., between different host CPUs within CPU pool 501) and/or routing within the network 504. In the case of the latter, the boundary between the network 504 and the IPU's pool can reside within the IPU, and/or, the IPU is deemed a gateway edge of the network 504.

The IPU 607 also includes multiple memory channel interfaces 628 to couple to external memory 629 that is used to store instructions for the general purpose cores 611 and input/output data for the IPU cores 611 and the ASIC blocks 621 - 626. The IPU includes multiple PCIe physical interfaces and an Ethernet Media Access Control block 630, and/or more direct channel interfaces (e.g., CXL and or AXI over PCIe) 631, to support communication to/from the IPU 607. The IPU 607 also includes a DMA ASIC block 632 to effect direct memory access transfers with, e.g., a memory pool 502, local memory of the host CPUs in a CPU pool 501, etc. As mentioned above, the IPU 607 can be a semiconductor chip, a plurality of semiconductor chips integrated within a same chip package, a plurality of semiconductor chips integrated in multiple chip packages integrated on a same module or card, etc.

Embodiments of the invention may include various processes as set forth above. The processes may be embodied in program code (e.g., machine-executable instructions). The program code, when processed, causes a general-purpose or special-purpose processor to perform the program code's processes. Alternatively, these processes may be performed by specific/custom hardware components that contain hard wired interconnected logic circuitry (e.g., application specific integrated circuit (ASIC) logic circuitry) or programmable logic circuitry (e.g., field programmable gate array (FPGA) logic circuitry, programmable logic device (PLD) logic circuitry) for performing the processes, or by any combination of program code and logic circuitry.

Elements of the present invention may also be provided as a machine-readable storage medium for storing the program code. The machine-readable medium can include, but is not limited to, floppy diskettes, optical disks, CD-ROMs, and magneto-optical disks, FLASH memory, ROMs, RAMs, EPROMs, EEPROMs, magnetic or optical cards or other type of media/machine-readable medium suitable for storing electronic instructions.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

Some possible embodiments include the following examples.

Example 1. An apparatus including a memory module. The memory module includes a memory. The memory module includes function execution circuitry. The function execution circuitry is configurable to execute a producer function and a consumer function of a multi-function process. The memory module includes an interface to be coupled to a memory controller.

Example 2. Example 1 above where the function execution circuitry is further configurable to cause an output of the producer function to be written to the memory, and, cause the output of the producer function to be read from the memory as an input for the consumer function.

Example 3. Examples 1 or 2 above where the memory module includes memory streaming circuitry that is configurable to stream data from a first location in the memory where the output of the producer function is stored to a second location in the memory where the input for the consumer function is stored.

Example 4. Examples 1, 2, or 3 above where the function execution circuitry is configurable to execute any of the following as the producer function and/or the consumer function: a neural network function; a Fast Fourier Transform function; a video encoding and/or decoding function; an error detection function; an error detection and correction function; a compression and/or decompression function; and/or, an encryption and/or decryption function.

Example 5. Examples 1, 2, 3 or 4 above where the memory and the function execution circuitry are integrated within a same semiconductor chip package; and/or, the interface is compliant with a JEDEC industry standard.

Example 6. Examples 1, 2, 3, 4 or 5 above where the memory module includes memory streaming circuitry that is configurable to stream data from a first location in the memory where the consumer function's output is stored to another memory that is external from the memory module.

Example 7. Examples 1, 2, 3, 4, 5 or 6 above where the function execution circuitry includes the following to support execution of the producer function and the consumer function: a processor; field programmable gate array circuitry; and/or; dedicated hardwired circuitry.

Example 8. A machine-readable storage medium containing program code that when processed by one or more processors causes a method to be performed, the method includes configuring a memory module to execute a producer function of a multi-stage process. The method includes configuring the memory module to execute a consumer function of the multi-stage process that executes downstream from the producer function.

Example 9. Example 8 above where the configuring of the memory module to execute the producer function includes configuring a processor of the memory module to execute program code that implements the producer function.

Example 10. Example 8 above where the configuring of the memory module to execute the producer function includes configuring a dedicated hardwired circuit of the memory module to execute the producer function, wherein, the dedicated hardwired circuit is designed to execute the producer function.

Example 11. Example 8, 9 or 10 above where the configuring of the memory module to execute the producer function includes determining address space within the memory module's memory where the producer function is to write the producer function's output information.

Example 12. Example 11 above where the configuring of the memory module to execute the consumer function includes configuring the memory module to read the consumer function's input information from the address space.

Example 13. Example 11 above where the method includes configuring data streaming circuitry of the memory module to stream the producer function's output from the address space to other address space of the memory module's memory, and, configuring the memory module to read the consumer function's input information from the other address space.

Example 14. Example 8, 9, 10, 11, 12 or 13 above where the method further includes configuring data streaming circuitry of the memory module to stream the consumer function's output externally from the memory module.

Example 15. A machine-readable storage medium containing program code that when processed by one or more processors causes a method to be performed, the method includes receiving a description of a multi-stage process. The method includes receiving information describing target hardware for the multi-stage process. The target hardware comprising a memory module capable of performing multiple functions. The method includes assigning execution of at least two stages of the multi-stage process to the memory module.

Example 16. Example 15 where the method further includes assigning at least one other stage of the multi-stage process to at least one logic resource of the target hardware other than a memory module.

Example 17. Example 16 where the at least one logic resource of the target hardware other than the memory module includes: a CPU; a GPU; an accelerator; an IPU; a DPU; and/or, an EPU.

Example 18. Examples 15, 16 or 17 where the method further includes recognizing that different types of logic resources within the target hardware are capable of executing a same stage of the multi-stage process. The method further includes selecting a particular type of logic resource from amongst the different types of logic resource to execute the stage based on performance criteria that is specified for the multi-stage process.

Example 19. Example 18 where the different types of logic resources comprise: a CPU; a GPU; an accelerator; an IPU; a DPU; and/or, an EPU.

Example 20. Example 15, 16, 17, 18 or 19 where the method further includes configuring the multi-stage process to cause an output of a producer function of the multi-stage process to be written to the memory module's memory. The method further includes configuring the multi-stage process to cause the output of the producer function to be read from the memory module's memory as an input for a consumer function multi-stage process.

## Claims

1. An apparatus, comprising:
a memory module, comprising:
a) a memory;
b) function execution circuitry, the function execution circuitry being configurable to execute a producer function and a consumer function of a multi-function process; and,
c) an interface to be coupled to a memory controller.

2. The apparatus of claim 1 wherein the function execution circuitry is further configurable to:
cause an output of the producer function to be written to the memory; and
cause the output of the producer function to be read from the memory as an input for the consumer function.

3. The apparatus of claim 2 wherein the memory module comprises memory streaming circuitry that is configurable to stream data from a first location in the memory where the output of the producer function is stored to a second location in the memory where the input for the consumer function is stored.

4. The apparatus of claim 1 wherein the function execution circuitry is configurable to execute any of the following as the producer function and/or the consumer function:
a neural network function;
a Fast Fourier Transform function;
a video encoding and/or decoding function;
an error detection function;
an error detection and correction function;
a compression and/or decompression function; and/or
an encryption and/or decryption function.

5. The apparatus of claim 1 wherein:
the memory and the function execution circuitry are integrated within a same semiconductor chip package; and/or,
the interface is compliant with a JEDEC industry standard.

6. The apparatus of claim 1 wherein the memory module comprises memory streaming circuitry that is configurable to stream data from a first location in the memory where the consumer function's output is stored to another memory that is external from the memory module.

7. The apparatus of claim 1 wherein the function execution circuitry comprises the following to support execution of the producer function and the consumer function:
a processor;
field programmable gate array circuitry; and/or;
dedicated hardwired circuitry.

8. A machine readable storage medium containing program code that when processed by one or more processors causes a method to be performed, the method comprising:
configuring a memory module to execute a producer function of a multi-stage process; and,
configuring the memory module to execute a consumer function of the multi-stage process that executes downstream from the producer function.

9. The machine readable storage medium of claim 8 wherein the configuring of the memory module to execute the producer function comprises configuring a processor of the memory module to execute program code that implements the producer function.

10. The machine readable storage medium of claim 8 wherein the configuring of the memory module to execute the producer function comprises configuring a dedicated hardwired circuit of the memory module to execute the producer function, wherein, the dedicated hardwired circuit is designed to execute the producer function.

11. The machine readable storage medium of claim 8 wherein the configuring of the memory module to execute the producer function comprises determining address space within the memory module's memory where the producer function is to write the producer function's output information.

12. The machine readable storage medium of claim 11 wherein the configuring of the memory module to execute the consumer function comprises configuring the memory module to read the consumer function's input information from the address space.

13. The machine readable storage medium of claim 11 wherein the method further comprises configuring data streaming circuitry of the memory module to stream the producer function's output from the address space to other address space of the memory module's memory, and, configuring the memory module to read the consumer function's input information from the other address space.

14. The machine readable storage medium of claim 8 wherein the method further comprises configuring data streaming circuitry of the memory module to stream the consumer function's output externally from the memory module.
